# EUROPEAN PATENT SPECIFICATION

(11) **EP 0 855 709 B1**
(45) Date of publication and mention of the grant of the patent: **02.05.2002**
(21) Application number: 98300187.6
(22) Date of filing: 13.01.1998
(51) Int. Cl.: G11B 17/04, G11B 7/085, G11B 11/10

(54) **Disk apparatus**
Plattengerät
Appareil à disque

(30) Priority: 23.01.1997 JP 994597
(43) Date of publication of application: 29.07.1998
(73) Proprietor: ALPS ELECTRIC CO., LTD., Ota-ku Tokyo 145 (JP)
(72) Inventor: Yamashita, Tatsumaro, Shibata-gun, Miyagi-ken (JP)
(74) Representative: Kensett, John Hinton

(56) References cited:
- EP-A- 0 196 691
- EP-A- 0 216 442
- EP-A- 0 439 286
- EP-A- 0 482 585
- EP-A- 0 518 259
- WO-A-95/08172
- US-A- 4 890 276

## Description

The present invention relates to a disc apparatus for retaining a disc cartridge housing a disc therein or a disc which is not housed in a disc cartridge, and particularly to a disc apparatus which can be reduced in thickness.

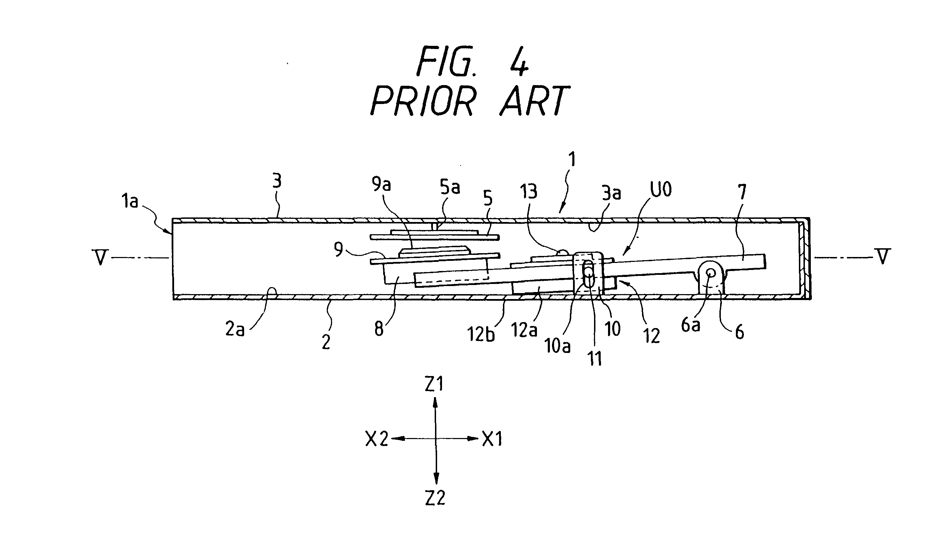

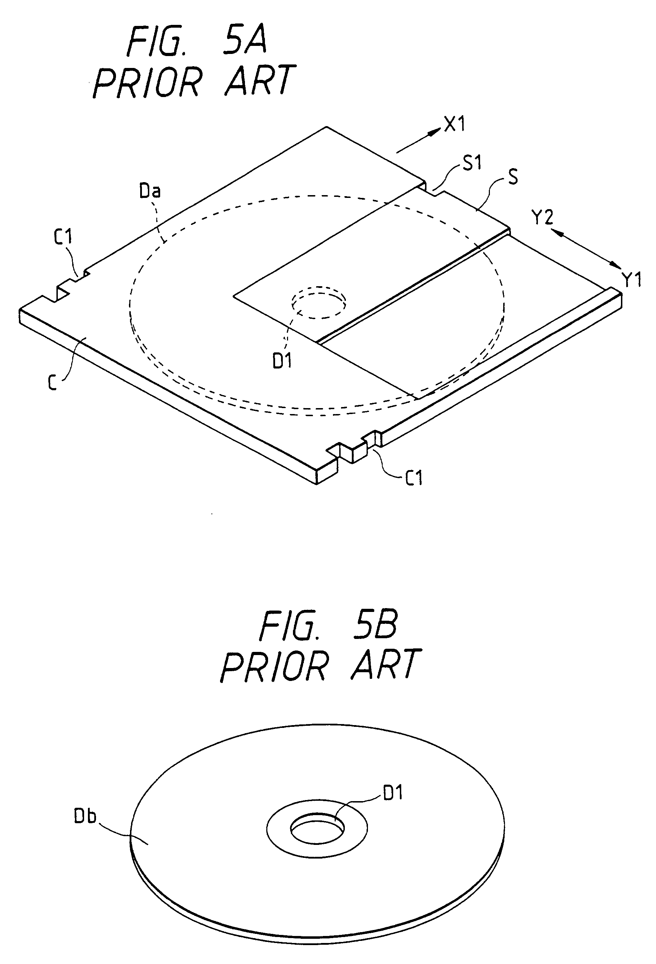

FIG. 4 of the accompanying drawings is a side view of a disc apparatus according to the related art. FIGS. 5A and 5B are perspective views illustrating discs that may be loaded on the disc apparatus shown in FIG. 4. FIG. 5A shows a cartridge disk, and FIG. 5B shows a disc which is not retained in the disc cartridge.

The disk apparatus shown in FIG. 4 is a thin disc apparatus into which there may be loaded both of a cartridge C with a disc Da retained therein as shown in FIG. 5A and a disc Db which is not retained in the disc cartridge as shown in FIG. 5B. The disc Da retained in the disc cartridge C and the disk Db may be a variety of discs such as PD (phase change disk), DVD-RAM (digital versatile disk-RAM), MO (magnetooptical disk), CD-R (CD-recordable), CD- RW (CD-rewritable). Examples of such disk apparatus are disclosed in document EP-A-0518259 and document WO-A-95/08172.

As shown in FIG. 4, the disc apparatus has a housing 1. The housing 1 comprises a lower housing 2 and an upper housing 3 as shown by a line V-V in FIG. 4 and has an insertion slot 1a defined on the left-hand side of FIG. 4. As shown in FIG. 4, a clamp 5 is pivotally supported by a shaft 5a to a top cover 3a of the upper housing 3. The shaft 5a and the clamp 5 are spring-biased in the direction of the lower housing 2 under spring force of a leaf spring (not shown).

A unit chassis 7 of a disc drive unit U0 is disposed on a bottom plate 2a of the lower housing 2. The unit chassis 7 is pivotally supported to a pivot 6a of a supporting member 6 provided on the bottom plate 2a. The unit chassis 7 has at its intermediate portion a guide member 10 extended from the bottom plate 2a, and an oblong hole 10a is defined in the guide member 10 so as to extend in the Z1 direction. Then, a pin 11 on the unit chassis 7 is fitted into the oblong hole 10a, i.e. the unit chassis 7 becomes able to move within the range restricted by this oblong hole 10a.

A spindle motor 8 is fixed to the unit chassis 7 at its end portion of the insertion slot 1a. A turntable 9 is rotatably supported to a rotary shaft (not shown) of the spindle motor 8. The clamp 5 disposed under the top cover 3a of the upper housing 3 is located above the turntable 9.

Over the unit chassis 7, a movable base 12a of an optical head 12 is slidably supported to guide shafts (not shown). The optical head 12 includes an objective lens 13 opposing the top cover 3a of the upper housing 3.

The cartridge C or the disc Db is inserted from the insertion slot 1a into the housing 1 along the X1 direction. At that time, the unit chassis 7 is positioned in the Z2 direction, and the disc Da or Db (hereinafter referred to as "disc D") is inserted into a clearance between the clamp 5 and the turntable 9. When a center hole D1 (FIG. 5A or 5B) of the disc D is inserted into a convex portion 9a on the turntable 9, the unit chassis 7 is elevated by an elevating member (not shown) in the Z1 direction, whereby the disc D is held by the clamp 5 and the turntable 9.

The disc D is rotated by the spindle motor 8 and the optical head 12 is slid from the inner peripheral direction to the outer peripheral direction (from the X2 direction to the X1 direction), whereby recorded data is read out from the disc D by the objective lens 13.

The above-mentioned thin disk apparatus encounters with the following problems.

Recorded data on the disc Da or Db of the cartridge C comprises a lead-in on the inner peripheral side (X2) and a lead-out on the inner peripheral side (X1). Thus, the optical head 12 is constantly placed on the inner peripheral side (X2 side).

On the other hand, the unit chassis 7 is pivotally supported by the pivot 6a and the X2 side of the unit chassis 7 is rotated around the pivot 6a in the Z axis direction, thereby forming a clearance between the clamp 5 and the turntable 9.

However, when the optical head 12 is placed on the inner peripheral side (X2 side), the movable base 12a of the optical head 12 abuts against the bottom plate 2a of the lower housing at its corner portion 12b on the X2 side, thereby hindering the unit chassis 7 from being lowered sufficiently in the 22 direction. As a consequence, a clearance between the clamp 5 and the turntable 9 cannot be formed to be enough to the extent that the cartridge C or the disc Db may be inserted easily, causing the information recording surface of the disk D to contact with the turntable 9. There is then the problem that the information recording surface of the disc D will be damaged by scratches or the like.

Although this problem may be solved by widening the clearance between the lower housing 2 and the upper housing 3, in that case, it is not possible to realise a thin disc apparatus.

It is an object of the present invention to provide a disc apparatus in which, in a thin disc apparatus a unit chassis may be elevated freely and an optical head may be prevented from troubling other member, thereby making the disc apparatus become thinner.

According to the present invention, there is provided a disc apparatus comprising: a supporting member for supporting a central portion of an inserted disc (Da, Db); a chassis having mounted thereon said supporting member and, an optical head opposing said disc (Da, Db) supported on said supporting member; and driving means (M) for moving said optical head in a radial direction of said disc (Da, Db), said chassis is freely rotatable about an outer peripheral side of said disc (Da, Db) in a disc supporting direction and in a support releasing direction, wherein there is provided control means for controlling said driving means (M) such that said optical head is evacuated to the outer periphery side of said disc (Da, Db) when said chassis is rotated in the support releasing direction and controlling said driving means such that said optical head is moved in the center side of said disc (Da, Db) when said chassis is rotated in the disc supporting direction and said disc (Da, Db) is supported by said supporting member, said optical head has a movable base, said chassis is formed with an opening in correspondence with a moving region of said optical head and the lower surface of said movable base is protruded below said chassis through said opening.

In the above-mentioned disc apparatus, a lower end of the optical head may abut against other member when the chassis is rotated in the disc support releasing direction under the condition that the optical head is located at the center side of the disc.

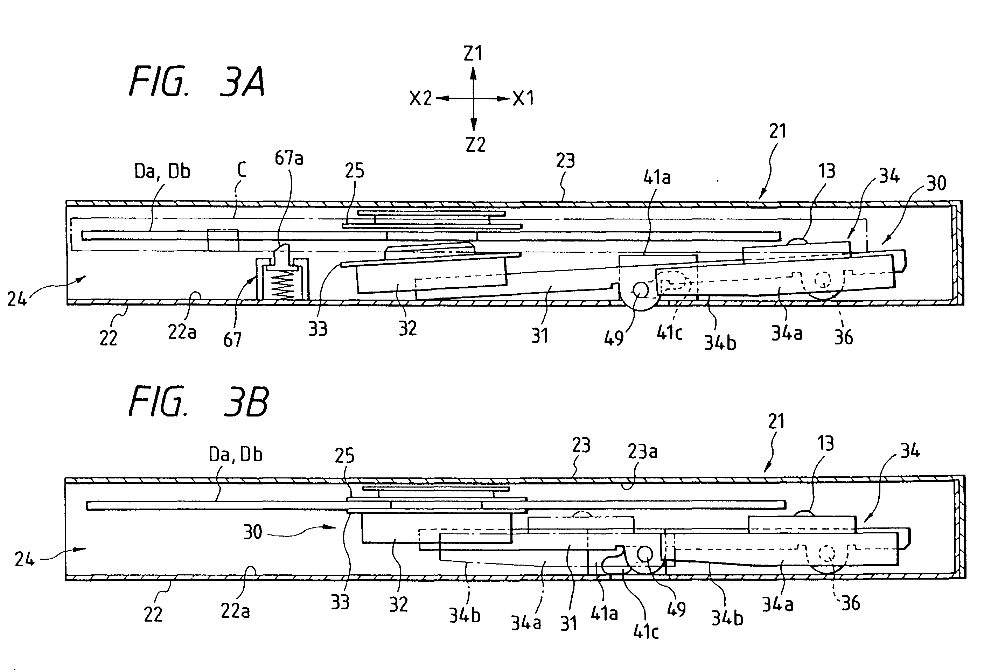

Further, the optical disc should preferably have a lower surface in which a recess portion is formed at its side portion in the disc center. As shown in FIGS. 3A and 3B, on the disc center side of the lower surface of the optical head, there may be formed a recess portion by forming an inclined surface of the shape such that it may approach the disc direction in the disc center. Alternatively, a concave portion may be formed on the edge portion at the disc center side of the optical head, and this concave portion may be used as the recess portion.

Furthermore, another supporting member for holding the disc between it and the supporting member provided on the chassis may be supported to the top cover surface of the housing, whereby the whole of the disc apparatus can be made thin.

According to the present invention, a unit chassis having an optical head mounted thereon is provided on a lower housing side. On one end of the unit chassis, there are provided a turntable which serves as a supporting member for supporting the disc and a spindle motor. When the turntable is rotated around a supporting shaft provided on the other end in the lower direction, there is formed a clearance between the turntable and a clamp which serves another supporting member provided on an upper housing. In that case, when the optical head is located at the turntable side, the bottom surface of the movable base of the optical head is protruded to the bottom cover side of the lower housing rather than the unit chassis so that the corner portion of the bottom surface of the movable base first contacts with a member such as a bottom cover or a base plate of the lower housing, thereby reducing a clearance between the clamp and the turntable. To avoid this, the disc is inserted into the disc apparatus under the condition that the optical head is located on the support shaft side (outer peripheral side of the disc) . In this case, the corner portion of the bottom surface of the movable base contacts with the bottom cover of the lower housing and thereby the movable base can be inhibited from being rotated any further. However, in this case, since the rotation angle of the unit chassis can be increased, it is possible to widen a clearance between a clamp and a turntable as compared with the case that the optical head is located at the turntable side.

Further, according to this method, the movable base with the optical head mounted thereon has at its bottom surface contacting with the bottom plate of the lower housing formed a recess portion such as a tapered surface, whereby the corner portion on the bottom surface of the movable base can be prevented from contacting with and damaging the bottom plate of the lower housing. Thus, since the rotation angle of the unit chassis can be made larger, it is possible to further widen the clearance between the clamp and the turntable.

Furthermore, as a timing the optical head is moved to the center side of the disc, the optical head may be moved to the center side of the disc after the unit chassis has been rotated in the disc supporting direction completely or the optical head may start moving in the disc center side in somewhere of the course during which the unit chassis is rotated in the disc supporting direction.

Embodiments of the invention will now be described, by way of example only, with reference to the accompanying drawings, in which;
FIG. 1 is a perspective view showing a disc apparatus according to an embodiment of the present invention in an exploded fashion;
FIGS. 2A and 2B are side views of a disc drive unit used to explain the manner in which a disc is clamped or not clamped by a turntable and a clamp, in which FIG. 2A shows the disc drive unit presented when an optical head is placed on the turntable side, and FIG. 2B shows the disc drive unit presented when the optical head is placed on the supporting shaft side;
FIGS. 3A and 3B are cross-sectional views of a disc apparatus taken along the line III-III in FIG. 1 according to another embodiment of the present invention, in which FIG. 3A shows the state in which an optical disc is not clamped by a turntable and a clamp, and FIG. 3B shows the state in which the optical disc is clamped by the turntable and the clamp;
FIG. 4 is a side view showing a disc apparatus according to the related art; and
FIG. 5A is a perspective view showing a disc cartridge in which a disc is retained;
FIG. 5B is a perspective view showing a disc which is not retained in a disc cartridge.

The present invention will hereinafter be described with reference to the drawings.

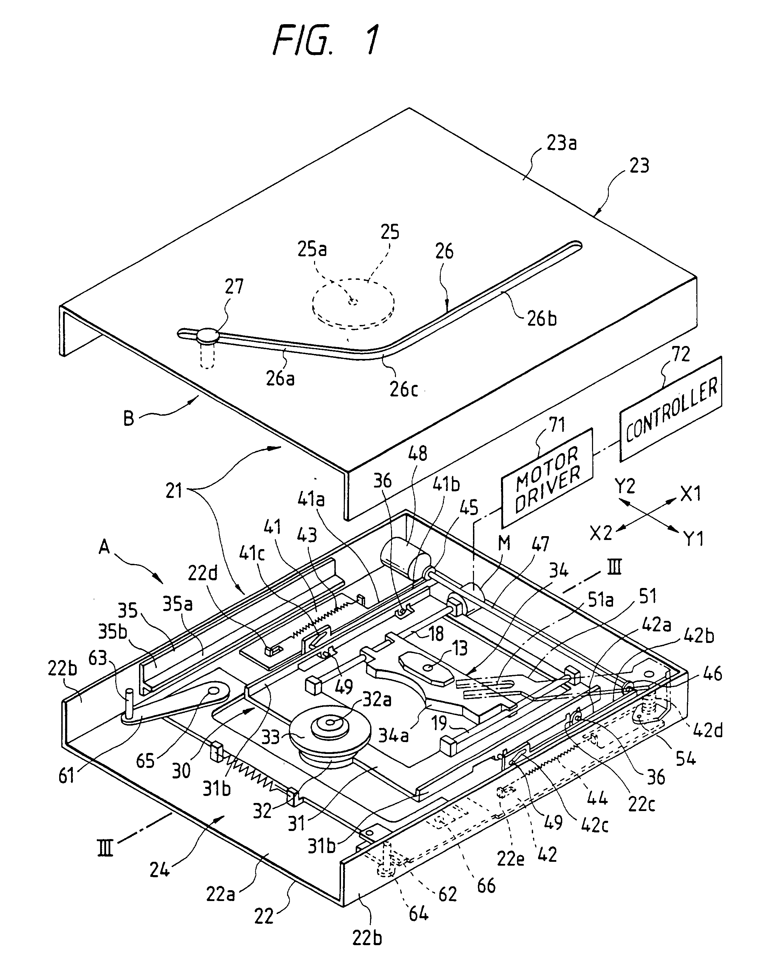

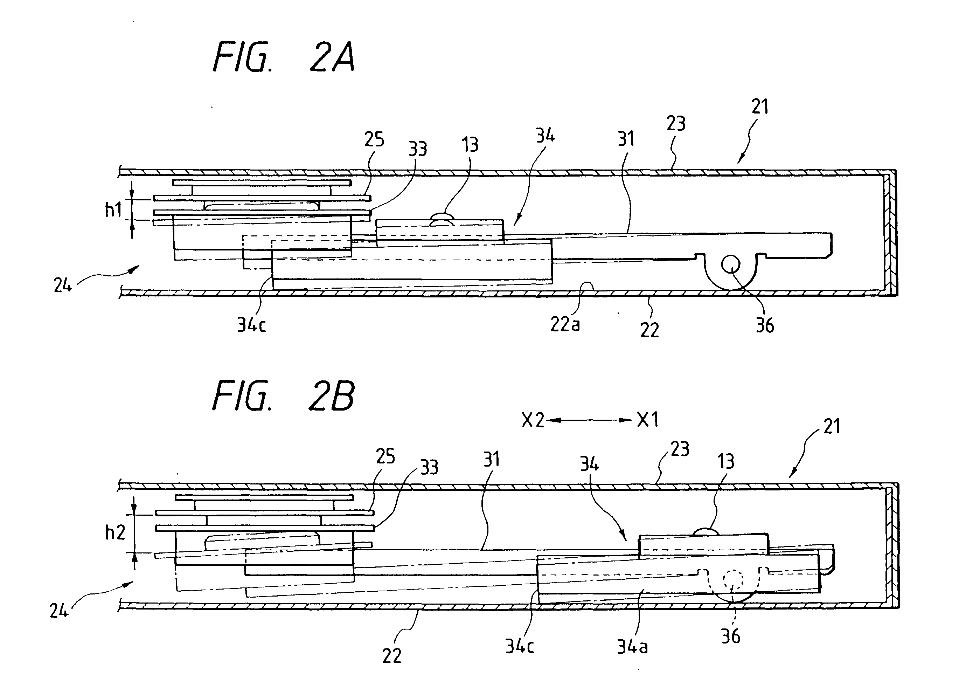

FIG. 1 is a perspective view showing a disc apparatus according to the present invention in an exploded fashion. FIGS. 2A and 2B are side views of a disc drive unit used to explain the manner in which a disc is clamped or not clamped by a turntable and a clamp, in which FIG. 2A shows the disc drive unit presented when an optical head is placed on the turntable side, and FIG. 2B shows the disc drive unit presented when the optical head is placed on the supporting shaft side. FIGS. 3A and 3B are cross-sectional views taken along the line III - III in FIG. 1, and illustrating a disc apparatus according to another embodiment of the present invention. FIG. 3A shows the disc apparatus presented when an optical disc is not clamped by a turntable and a clamp, and FIG. 3B shows the disc apparatus presented when the optical disc is clamped by the turntable and the clamp.

In this disc apparatus, there may be loaded the disc cartridge C in which the disc Da is retained as shown in FIG. 5A and the disc Db which is not retained in the disc cartridge as shown in FIG. 5B. The disc Da retained in the disc cartridge C and the disc Db may be a variety of discs such as PD (phase change disk), DVD-RAM (digital versatile disk-RAM), MO (magnetooptical disk), CD-R (CD-recordable) and CD-RW (CD-rewritable).

As shown in FIG. 1, a disc apparatus according to the present invention comprises a lower half portion A and an upper half portion B. The disc apparatus formed by a combination of the lower half portion A and the upper half portion B is thin as shown in FIGS. 2A and 2B.

The disc apparatus has a housing 21 comprising a lower housing 22 and an upper housing 23. The lower housing 22 and the upper housing 23 are joined to form the thin box-like housing 21 shown in FIGS. 2A, 28 and FIGS. 3A, 3B, and an insertion slot 24 is defined at the left-hand side of the sheets of drawings. The disc cartridge C shown in FIG. 5A or the disc Db shown in FIG. 5B is inserted from the insertion slot 24 into the housing 21 along the direction shown by an arrow X1.

As shown in FIG. 1, a clamp 25 serving as one holding member (holding member on the other side) is pivotally supported by a pivot 25a to a top cover 23a of the upper housing 23. The pivot 25a and the clamp 25 are urged in the direction of the lower housing 22 under spring force of leaf springs (not shown).

A guide 26 is of an oblong opening defined on the top cover 23a of the upper housing 23, and comprises a curved guide portion 26a and a straight guide portion 26b. The curved guide portion 26a is extended at the insertion slot 24 side in the X1 direction of the insertion direction of the disc cartridge C and also obliquely extended in the Y1 direction perpendicular to the insertion direction. The straight guide portion 26b is elongated from the curved guide portion 26a and extended in parallel to the X1 direction. A pin-like movable member 27 serving as a release/reject member is loosely fitted into the guide 26 and is freely movable within the oblong opening of the guide 26. Though not shown in detail, when the disc cartridge C or the disc Db is inserted into the disc apparatus in the X1 direction, the movable member 27 is pressed by a tip end of the disc cartridge C or the disc Db and thereby slid to reach the end (back of the apparatus) of the guide 26 at its X1 side. When the disc cartridge C or the disc Db is ejected, the movable member 27 is spring-biased in the X2 direction to eject the disc cartridge C or the disc Db from the insertion slot 24.

At the same time the movable member 27 is slidably moved along the guide 26 from the X2 side to the X1 side, the movable member 27 is also slidably moved along the guide 26 from the Y2 side to the Y1 side. Thus, a shutter of the disc cartridge C can be opened and closed as the movable member 27 is moved in the X-axis direction, as will be described later on.

As shown in FIG. 1, guide members 35 are secured to the insides of two side plates 22b, 22b of the lower housing 22, although only one guide member 35 secured to one side plate 22b is shown in FIG. 1. The guide member 35 is made of synthetic resin of which the coefficient of friction is small. The guide member 35 is a united member comprising a lower guide wall 35a for supporting the lower surface of the disc cartridge C or the disc Db and a side guide wall 35b for supporting the side portion of the disc cartridge C or the disc Db. The lower guide wall 35a is located at substantially the intermediate position of the height direction of the side plate 22b of the lower housing 22. Therefore, as shown in FIGS. 3A and 3B, the guide member 35 introduces the disc cartridge C or the disc Db inserted from the insertion slot 24 into the upper area within the housing 21.

As shown in FIG. 1, the lower housing 22 has a bottom cover 22a, and a unit chassis 31 for supporting a disc drive unit 30 is disposed on the bottom cover 22a. The unit chassis 31 is a U-shaped chassis molded by sheet metal processing. The unit chassis 31 has at its end on the insertion slot 24 side fixed a thin spindle motor 32. The spindle motor 32 has at its rotary shaft 32a secured a turntable 33. According to this embodiment, the turntable 33 serves as a supporting member for supporting a central portion of a disc. The clamp 25 disposed under the top cover 23a of the upper housing 23 is located right above the turntable 33.

An optical head 34 is supported on the unit chassis 31 in such a manner that it may be freely moved in the X1 - X2 direction by means of a screw shaft 18 and a guide shaft 19. An objective lens 13 is provided on the optical head 34. The unit chassis 31 has on its X1 side attached a sled motor M of which the output shaft is connected to the screw shaft 18. The sled motor M is the drive means for moving the optical head 34 in the disc radius direction. The optical head 34 is moved in the X1 - X2 directions by rotating the sled motor M in the clockwise direction or in the counterclockwise direction. The sled motor M serving as the drive means is energized by a motor driver 71, and the motor driver 71 is driven under control of control means, i.e. controller 72. The controller 72 is formed of some suitable means, such as a microcomputer.

The unit chassis 31 has support shafts 36, 36 inserted into side plates 31b, 31b at its back of the apparatus side (X1 side). The lower housing 22 has on its bottom cover 22a molded engagements 22c and the support shafts 36 are fixed to the engagements 22c. Thus, the unit chassis 31 of the disc drive unit 30 are freely rotatable about the support shafts 36, 36 provided to the back of the disc apparatus (i.e. outer peripheral side of the disc to be loaded).

The lower housing 22 has on its bottom cover 22a provided a pair of sheet-like control members 41, 42 which are freely slidable in the X1 - X2 directions. A coil spring 43 is stretched between one control member 41 and a spring engagement 22d erected from the bottom cover 22a of the lower housing 22. The control member 41 is spring-biased in the X2 direction under spring force of the coil spring 43. Similarly, a coil spring 44 is stretched between the other control member 42 and a spring engagement 22e erected from the bottom cover 22a of the lower housing 22. The control member 42 is spring-biased in the X2 direction under spring force of the coil spring 44.

A vertical bent engagement 41a is unitarily formed with one control member 41, and the vertical bent engagement 41a has at its end on the X1 side formed a rack 41b. Similarly, a vertical bent engagement 42a is unitarily formed with the other control member 42, and the vertical bent engagement 42a has at its end of the upper edge on the X1 side formed a rack 42b.

As shown in FIG. 1, the lower housing 22 supports at its end on the X1 side a rotatable shaft 47 extended in the Y direction. This shaft 47 is supported to the lower housing 22, and a support mechanism thereof is not shown. The shaft 47 has at its one end fixed a gear 45 and has at its another end fixed a gear 46. The gear 45 is meshed with the rack 41b of one control member 41, and the gear 46 is meshed with the rack 42b of the other control member 42. A pair of control members 41 and 42 are joined together by means of the gears 45, 46 and the shaft 47, and hence the control members 41 and 42 are moved in the X1 - X2 directions in synchronism with each other. The control member 42 has an engagement portion 42d extended in the X1 direction, and the tip end of the engagement portion 42d is curved in the Y2 direction as substantially L-shape. When the control member 42 is moved in the X1 direction, the engagement portion 42d is locked to a locking pin 54 provided on a base end of a locking releasing member 51 which will be described later, thereby resulting in the control member 42 being engaged to the X1 side.

A restoration motor 48 is disposed on the back of the lower housing 22 in the X1 direction. A gear (not shown) on the output shaft of the restoration motor 48 is meshed with the gear 45. When the restoration motor 48 is not energized, a pair of the control members 41 and 42 become able to move in the X2 direction under spring force of the coil springs 43 and 44 regardless of the load on the restoration motor 48. When the restoration motor 48 is energized, the gears 45 and 46 are driven to transmit a moving force to the racks 41b and 42b, whereby the control members 41 and 42 are pulled in the X1 direction, respectively.

The control member 41 has at its bent engagement 41a defined a crank-shaped drive hole 41c serving as a driving portion for moving the disc drive unit 30 in the clamping direction. The control member 42 has at its bent engagement 42a defined a crank-shaped drive hole 42c serving as a driving portion. The unit chassis 31 has at its side plates 31b, 31b fixed pins 49, 49, and the pins 49 are inserted into the drive holes 41c and 42c, respectively. As shown in FIG. 1 and FIGS. 3A, 3B, when the control members 41 and 42 are moved in the X1 direction, the drive holes 41c and 42c lower the pins 49 to rotate the unit chassis 31 about the support shafts 36 in the lower direction (disc hold releasing direction) , thereby resulting in the turntable 33 being positioned under the insertion guide area of the disc cartridge C or the disc Db. When the control members 41 and 42 are moved in the X2 direction, the crank-like drive holes 41c and 42c elevate the pins 49 to rotate the unit chassis 31 in the upper direction (clamping direction; disc hold direction) as shown in FIG. 3B, thereby making it become possible to hold the disc between the turntable 33 and the clamp 25.

The lower housing 22 has at its corner on the X1 and Y1 sides provided a lock releasing member (lock releasing arm) depicted by reference numeral 51 in FIG. 1. Although the lock releasing member 51 will not be described fully, it is to be noted that, when the movable member 27 is moved with a pressure in the X1 direction together with the disc cartridge C or the disc Db, a tip end of the movable member 27 is engaged into an engagement slit 51a bored at the top of the lock releasing member 51. Then, when the disc cartridge C or the disc Db is further inserted into the disc apparatus, the movable member 27 is moved to the back of the disc apparatus direction (X1 direction), whereby the lock releasing member 51 is rotated. The lock releasing member 51 has at its base end formed a locking pin 54. When this locking pin 54 is rotated, the engagement portion 42d of the aforementioned control member 42 is released from the locking pin 54. The control members 42 and 41 are moved in the X2 direction under spring force of the coil springs 43 and 44, whereby the disc drive unit 30 is moved in the clamping direction (disk holding direction) , thus to hold the disc between the turntable 33 and the clamp 25.

The lower housing 22 has on its respective side portions of the Y1 direction and the Y2 direction provided a pair of positioning arms 61, 62 in the insertion slot 24 side. The positioning arms 61 and 62 have on their tip end portions fixed positioning pins (positioning members) 63 and 64 which are extended upwardly. The base end portions of the positioning arms 61 and 62 rotatably supported by support shafts 65 and 66 fixed to the bottom cover 22a of the lower housing 22. Although the positioning pins (positioning members) 63, 64 will not be described in detail, when the control members 41 and 42 are moved in the X1 direction and the disc drive unit 30 is lowered in the lower direction (disc hold releasing direction) , the positioning arm 61 is rotated in the Y2 direction and the positioning arm 62 is rotated in the Y1 direction, whereby the positioning pins 63 and 64 are moved away from each other. When the control members 41 and 42 are moved in the X2 direction and the disc drive unit 30 is rotated in the upper direction (disc hold direction) , the positioning arm 61 is rotated in the Y1 direction and the positioning arm 62 is rotated in the Y2 direction, whereby the positioning pins 63 and 64 are moved close to each other. That is, when the cartridge C or the disc Db is inserted, the positioning pins 63 and 64 are moved away from each other, and when the disk is loaded on the disc unit 30 to be clamped, the positioning pins 63 and 64 are moved close to each other. The positioning pins 63 and 64 are fitted into recesses C1, C2 (see FIG. 5A) defined on the respective side portions of the disc cartridge C, whereby the disc cartridge C is positioned accurately and held. Alternatively, the positioning pins 63 and 64 are able to precisely position the disc Db by restricting the disc Db at the positions in the outer peripheral portion.

An operation of the disc apparatus will be described next.

Into this disc apparatus, there may be loaded both of the disc cartridge C in which the disc Da is retained as shown in FIG. 5A and the disc Db which is not retained in the disc cartridge C as shown in FIG. 5B. The discs Da and Db both have the same diameter and the same inner diameter of the center hole D1.

The cartridge C shown in FIG. 5A has at its end of the X1 side of the insertion direction provided a shutter S which can be slid in the Y1 direction. The shutter S is spring-biased in the closing direction (Y2 direction) under spring force of a spring (not shown). When the shutter S is slid in the Y1 direction, the disc cartridge C yields a window through which the center hole D1 of the disc D and the disc surface are exposed.

The shutter S is released by the movable member 27. Specifically, as shown in FIG. 1, when the disc cartridge C is inserted into the disc apparatus, the movable member 27 is waiting on the insertion slot 24 side (X2 side). Immediately after the cartridge C is inserted into the insertion slot 24, the movable member 27 is fitted-into the end portion S1 of the shutter S. If the disc cartridge C is further inserted into the insertion slot 24 by hand, then the movable member 27 is slid with a pressure along the guide 26. In this case, when the movable member 27 is moved along the curved guide portion 26a of the guide 26, the shutter S is slid in the Y1 direction by a moving force of the movable member 27 in the Y1 direction. When the movable member 27 reaches an inflection point 26c between the curved guide portion 26a and the straight guide portion 26b of the guide 16, the shutter S is released completely. Thereafter, when the disc cartridge C is inserted into the disc apparatus, the movable member 27 is slid along the straight guide portion 26b of the guide 26 in the X1 direction. Since the disc cartridge C is inserted into the disc apparatus under the condition that the shutter S is opened as described above, the objective lens 13 enters the inside of the opened disc cartridge C to oppose the disc Db. Thus, the objective lens 13 and the turntable 33 can be prevented from contacting with the shutter S as shown in FIG. 3A.

FIG. 2A shows the manner in which the unit chassis 31 is rotated when the optical head 34 is located at the position (X2 side) close to the turntable 33 side. When the unit chassis 31 is very slightly rotated in the lower direction, the corner portion 34c on the bottom surface of the movable base 34a of the optical head 34 abuts against the bottom cover 22a of the lower housing 22, thereby inhibiting the unit chassis 31 from rotating any more. Reference numeral h1 depicts a clearance dimension between the clamp 25 and the turntable 33.

On the other hand, FIG. 2B shows the manner in which the unit chassis 31 is rotated when the optical head 34 on the unit chassis 31 is moved to the rightmost of the X1 side. When the unit chassis 31 is rotated in the lower direction, the corner portion 34c on the bottom surface of the movable base 34a of the optical head 34 abuts against the bottom cover 22a of the lower housing 22, thereby inhibiting the unit chassis 31 from rotating any further similarly as described above. However, since the optical head 34 is located at the rightmost of the X1 side, the unit chassis 31 can take a large rotation angle, and hence it is possible to increase a clearance dimension h2 as compared with the clearance dimension h1 between the clamp 25 and the turntable 33.

As described above, according to the disc apparatus of the present invention, the sled motor M is driven under control of the controller 72 to move the optical head 34 to the rightmost position of the X1 direction in the standby state that the unit chassis 31 is moved in the disc hold releasing direction as shown in FIG. 2B. When or after the disc cartridge C or the disc Db is inserted into the housing 21 and the unit chassis 31 is rotated in the disc hold direction so that the disc Da of the disc cartridge C or the disc Db is sandwiched between the clamp 25 and the turntable 33, the optical head 34 is moved in the inner peripheral direction (X2 direction) of the disc Da or Db.

Since the optical head 34 is moved in the center side of the disc to start reading data from the disc after the cartridge C or the disc Db has been loaded into the disc apparatus, it becomes possible to maintain a sufficiently large distance between the disc Da or Db and the turntable 33 upon loading. Thus, it becomes possible to prevent the disc surface from being scratched or damaged due to the contact of the disc Da or Db and the turntable 33. Furthermore, it becomes possible to reduce the thickness of the housing.

In the disc apparatus shown in FIGS. 3A and 3B, the bottom surface of the movable base 34a which is a part of the optical head 34 disposed on the unit chassis 31 of the disc drive unit 30 is formed a tapered surface 34b which progressively reduces its thickness in the X2 side rather than the central portion. As a result, the edge of the movable base 34a is recessed in the disc center side. As shown in FIG. 3A, when the optical head 34 is located at the rightmost position of the X1 direction, if the unit chassis 31 is rotated about the supporting shaft 36 in the non-clamping direction, then the tapered surface 34b opposes the bottom cover 22a of the lower housing 22 with a very small clearance in parallel. Also, as shown in FIG. 3B, when the unit chassis 31 is rotated in the upper direction and is placed in the clamping state, the optical head 34 is able to move over the unit chassis 31 in the X1 - X2 direction as shown by a dot-and-dash line in FIG. 3B.

As shown in FIG. 3A, the disc cartridge C and the disc Db is inserted into the disc apparatus from the insertion slot 24 under the condition that the optical head 34 is located at the rightmost position of the X1 direction, similarly to the case of FIGS. 2A and 2B. However, in FIG. 3A, since the bottom surface of the movable base 34a of the optical head 34 is formed as the tapered surface 34b instead of the corner portion 34c, the turntable 33 disposed at the tip end of the unit chassis 31 becomes able to further rotate in the non-clamping direction. In addition, the tapered surface 34b can be rotated until it becomes parallel to the bottom cover 22a of the lower housing 22. At that time, the end of the spindle motor 32 on the X2 side contacts with the bottom cover 22a of the lower housing 22. Therefore, the clearance dimension between the clamp 25 and the turntable 33 is maximized in excess of the case of FIGS. 2A and 2B. Thus, according to the thinner disc apparatus, since the clearance dimension between the clamp 25 and the turntable 33 can be maintained sufficiently more than ever, when the disc cartridge C or the disc Db is inserted into the disc apparatus, the disc becomes difficult to contact with the turntable 33, thereby preventing the disc recording surface from being scratched or damaged.

When the disc cartridge C is inserted into the disc apparatus under the condition that the disc Da retained within the disc cartridge C is skewed or the disc Db is inserted into the disc apparatus from the insertion slot 24 under the condition that the disc Db is skewed, it may be considered that the tip end of the disc Da or the disc Db is brought in contact with the turntable 33 or that the disc recording surface and the turntable 33 may contact with each other.

In that case, a disc supporting member 67 which resiliently protrudes in the Z1 direction shown in FIG. 3A, for example, is provided between the insertion slot 24 and the turntable 33. The disc Da or Db which is inserted into the disc apparatus under the condition that it is skewed is supported by this disc supporting member 67, thereby preventing the tip end of the disc and the disc recording surface from contacting with the turntable 33. A protruded portion 67a of the disc supporting member 67 should preferably be made of a suitable material such as rubber or synthetic resin which is hard to damage the disc surface. Furthermore, the height of the protruded portion 67a should preferably be slightly higher than the maximum height of the turntable 33 in the Z1 direction.

According to the present invention set forth above in detail, even in the thin disc apparatus, since the large clearance can be formed between the clamp and the turntable, the disc cartridge or the disc which is not retained in the disc cartridge can be reliably inserted into the disc apparatus through this clearance.
Furthermore, since the recording surface of the disc of the inserted cartridge or the recording surface of the inserted disc which is not retained in the disc cartridge and the turntable can be prevented from contacting with each other, the disc can be loaded onto the turntable without damaging the disc recording surface.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

## Claims

1. A disc apparatus comprising:
a supporting member (33) for supporting a central portion of an inserted disc (Da, Db);
a chassis (31) having mounted thereon said supporting member (33) and an optical head (34) opposing said disc (Da, Db) supported on said supporting member (33); and
driving means (M) for moving said optical head (34) in a radial direction of said disc (Da, Db), said chassis (31) being freely rotatable about an outer peripheral side of said disc (Da, Db) in a disc supporting direction and in a support releasing direction,
**characterised in that** there is provided control means (72) for controlling said driving means (M) such that said optical head (34) is evacuated to the outer periphery side of said disc (Da, Db) when said chassis (31) is rotated in the support releasing direction and controlling said driving means such that said optical head (34) is moved to the center side of said disc (Da, Db) when said chassis (31) is rotated in the disc supporting direction and said disc (Da, Db) is supported by said supporting member (33), said optical head (34) having a movable base (34a), said chassis (31) being formed with an opening in correspondence with a moving region of said optical head (34) and the lower surface of said movable base (34a) being protruded below said chassis (31) through said opening.

2. A disc apparatus according to Claim 1, wherein said optical head (34) has a lower surface in which a recess portion is formed at its side portion in the disc center.

3. A disc apparatus according to any preceding claim, wherein another supporting member (25) for supporting said disc between it and said supporting member (33) provided on said chassis is supported by a top cover surface of a housing.

## Patentansprüche

1. Diskgerät umfassend:
ein Halteelement (33) zum Halten eines zentralen Bereiches einer eingeführten Disk (Da, Db);
ein Chassis (31), auf welchem das Halteelement (33) und ein Optikkopf (34) montiert sind, welcher der auf dem Halteelement (33) gehaltenen Disk (Da, Db) gegenüberliegt; und
Antriebsmittel (M) zum Bewegen des Optikkopfes (34) in einer radialen Richtung der Disk (Da, Db), wobei das Chassis (31) frei um eine äußere periphere Seite der Disk (Da, Db) in einer Diskhalterichtung und in einer den Halt freigebenden Richtung drehbar ist, **dadurch gekennzeichnet, dass** Steuermittel (72) zum Steuern der Antriebsmittel (M) in einer Weise vorgesehen sind, dass der Optikkopf (34) zur Seite der äußeren Peripherie der Disk (Da, Db) hin ausgeschoben wird, wenn das Chassis (31) in der den Halt freigebenden Richtung gedreht wird, und zum Steuern der Antriebsmittel in einer Weise, dass der Optikkopf (34) zur Seite des Zentrums dieser Disk (Da, Db) hin bewegt wird, wenn das Chassis (31) in der Diskhalterichtung gedreht und die Disk (Da, Db) durch das Halteelement (33) gehalten wird, wobei der Optikkopf (34) eine bewegliche Basis (34a) hat, das Chassis (31) mit einer Öffnung ausgebildet ist, die einem Bewegungsbereich des Optikkopfes (34) entspricht, und die untere Fläche der beweglichen Basis (34a) durch diese Öffnung hindurch unter das Chassis (31) ragt.

2. Diskgerät nach Anspruch 1, bei welchem der Optikkopf (34) eine untere Fläche hat, in welcher ein Ausnehmungsabschnitt in dem Seitenabschnitt zum Diskzentrum hin ausgebildet ist.

3. Diskgerät nach einem der vorangehenden Ansprüche, bei welchem ein anderes Halteelement (25) zum Halten der Disk zwischen diesem und dem an dem Chassis vorgesehenen Halteelement (33) durch eine obere Abdeckungsfläche eines Gehäuses gehalten wird.

## Revendications

1. Appareil à disque comprenant:
un organe de support (33) pour supporter une partie centrale d'un disque inséré (Da, Db);
un châssis (31) sur lequel sont montés ledit organe de support (33) et une tête optique (34) faisant face audit disque (Da, Db) et supportée sur ledit organe de support (33); et
un moyen d'entraînement (M) pour déplacer ladite tête optique (34) dans une direction radiale dudit disque (Da, Db), ledit châssis (31) pouvant pivoter librement autour d'un côté périphérique externe dudit disque (Da, Db) dans une direction de support de disque et dans une direction de dégagement du support,
**caractérisé en ce que**
il est prévu un moyen de commande (72) pour commander ledit moyen d'entraînement (M) d'une manière telle que ladite tête optique (34) est évacuée vers le côté de la périphérie extérieure dudit disque (Da, Db) lorsque ledit châssis (31) est pivoté dans la direction de dégagement du support, et pour commander ledit moyen d'entraînement d'une manière telle que ladite tête optique (34) est déplacée vers le côté central dudit disque (Da, Db) lorsque ledit châssis (31) est pivoté dans la direction de support de disque et que ledit disque (Da, Db) est supporté par ledit organe de support (33), ladite tête optique (34) comprenant une base mobile (34a), ledit châssis (31) comportant une ouverture en correspondance avec une région de déplacement de ladite tête optique (34), et la surface inférieure de ladite base mobile (34a) faisant saillie au-dessous dudit châssis (31) à travers ladite ouverture.

2. Appareil à disque selon la revendication 1, dans lequel ladite tête optique (34) comporte une surface inférieure dans laquelle une partie évidée est formée sur sa partie latérale dans le centre du disque.

3. Appareil à disque selon la revendication 1 ou 2, dans lequel un autre organe de support (25) destiné à supporter ledit disque entre lui et ledit organe de support (33) agencé sur ledit châssis est supporté par une surface de couvercle supérieur d'un boîtier.
